# EUROPEAN PATENT APPLICATION

(11) **EP 4 604 137 A1**
(43) Date of publication of application: **20.08.2025**
(21) Application number: 24382158.4
(22) Date of filing: 16.02.2024
(51) Int. Cl.: G21B 1/05, G21B 1/11, H01F 6/06

(54) **ULTRA-COMPACT HIGH-FIELD SPHERICAL TOKAMAK FOR FUSION ENERGY**

(71) Applicant: Universidad de Sevilla, 41013 Sevilla (ES)
(72) Inventor: Garcia Muñoz, Manuel, Sevilla (ES); Viezzer, Eleonora, Sevilla (ES)
(74) Representative: Pons IP

(57) **Abstract**

The present invention provides an appealing, fast, and cost-effective alternative to conventional nuclear fusion reactors. An ultra-compact spherical tokamak that combines three key features aimed at accelerating fusion energy as a viable energy source, these features are spherical type tokamaks, negative triangularity plasma shape and high-temperature superconducting coils.

## Description

### OBJECT OF THE INVENTION

The present invention relates to fusion reactors and in particular tokamak fusion reactors based on spherical type tokamaks combined with negative triangularity plasma shape operated at high toroidal field.

The invention aims to provide a fast and cost-effective alternative for establishing a commercial fusion power plant offering to realize a superior confinement regime, ensuring elevated plasma performance along with an effective power exhaust solution and self-sufficient tritium production.

### BACKGROUND OF THE INVENTION

Harnessing fusion reactions for controlled and cost-effective power production poses a formidable challenge, primarily due to the complexities involved in confining a high-temperature plasma with fusion-relevant properties. A promising route to a nuclear fusion power plant is the use of toroidal magnetic fields. The most advanced magnetic topology to confine a fusion burning plasma is the so-called tokamak device *(*J. lesson, Tokamaks, 4th edition, Oxford University Press, ISBN: 9780199592234*)*. Conventional tokamaks are large aspect ratio torii (A=R/a, with R being the major and the minor plasma radius) that confine the plasma in helical magnetic fields formed, mainly, by an externally imposed toroidal magnetic field and a poloidal field self-generated by a current induced externally in the plasma. Large conventional tokamaks such as JET, JT60-U and TFTR, among others, have been successfully used to develop the physics basis and baseline scenario for ITER, the pinnacle experimental fusion reactor aiming to demonstrate the scientific and technological viability of fusion as a future energy source with a net energy gain. However, ITER's scalability calls for alternative power and particle exhaust techniques, critical for the success of tokamak-based fusion power plants.

Spherical Tokamaks (STs) offer an alternative path to more compact and economical fusion reactors compared to their conventional tokamak counterparts. The patent application WO2015155531A1 describes a compact nuclear fusion reactor for use as a neutron source or energy source. The reactor comprises of a toroidal plasma chamber and a magnets system arranged to generate a magnetic field for confining a plasma in the chamber. With a lower aspect ratio (A ~ 2), STs exhibit high confinement levels and the more efficient use of the magnetic field and improved stability enables normalized plasma pressures that can be up to 40% higher when compared to their counterpart conventional tokamaks *(*D. C. Robinson, 1999, Plasma Physics and Controlled Fusion, 41, A 143*).* However, the high-power densities achievable in STs impose even more stringent constraints on their Plasma Facing Components (PFCs) compared to conventional tokamaks, necessitating alternative power and particle exhaust techniques for an ST-based fusion pilot plant (FPP). Moreover, due to their compactness, standard STs suffer an important challenge to accommodate in the center stack the coils system, neutron shielding and tritium breeding blanket.

While the ITER baseline scenario, a high confinement mode (H-mode) with tolerable plasma-wall interaction, has been demonstrated in most present tokamaks, its applicability to a future fusion power plant remains uncertain. The primary challenge lies in proving that a fusion plasma can be self-heated and sustained by thermonuclear reactions in an economical tokamak configuration. Unfortunately, tokamak fusion plasmas in H-mode tend to develop magnetohydrodynamic (MHD) fluctuations that hinder the steady-state operation that is crucial for an attractive FPP. MHD fluctuations, particularly Edge Localized Modes (ELMs), have emerged as a major challenge for the integrity of large burning plasma devices in present tokamaks. Developing a core-edge integrated scenario that combines high performance and a power exhaust solution without ELMs is a top priority in the research programs of major tokamaks worldwide.

While a robust ELM control technique based on externally applied Resonant Magnetic Perturbations (RMPs) has been successful for ITER, such external actuators may not be applicable to FPPs. Recent experiments at the TCV and DIII-D tokamaks suggest that H-mode-like plasmas with Negative Triangularity (NT) shapes could provide an attractive scenario for the ideal core-edge integrated scenario in future tokamak-based FPPs *(*A. Pochelon et al, 1999, Nucl. Fusion 39 1807*,* Y. Camenen et al, 2007, Nucl. Fusion 47 510*,* M. E. Austin et al, 2019, Phys. Rev. Lett. 122 115001*).*

Experiments conducted at TCV demonstrate a notable enhancement in core plasma confinement during the transition from positive to negative triangularity *(*A. Pochelon etal, 1999, Nucl. Fusion 39 1807)*.* However, this beneficial effect diminishes at high collisionality levels.

### DESCRIPTION OF THE INVENTION

In accordance with a first aspect of the present invention there is provided a spherical tokamak nuclear fusion reactor with high magnetic fields and a plasma shape characterized by negative triangularity. The high confinement properties observed in negative triangularity shaped L-mode plasmas in conventional tokamaks and the naturally improved core confinement and stability observed in low aspect ratio tokamaks offers to establish a superior confinement regime, ensuring elevated plasma performance along with an effective power exhaust solution.

High-temperature superconductors (HTS) present a transformative capability to operate at elevated magnetic fields, with reduced size and costs, compared to conventional materials like copper coils and low-temperature superconductors. The synergy of HTS technology with negative triangularity and spherical tokamak plasmas is a distinctive feature which is crucial to the advancement of a compact fusion power plant provided by the present invention. The integration of these three key technologies lays the foundation for an advanced super-improved confinement regime, devoid of edge localized modes, and offers a natural solution to the power exhaust challenge and self-sufficient tritium breeding in an ultra-compact fusion reactor. Self-sufficient tritium breeding requires tritium breeding blankets in the reactor center stack that cannot be installed with positive triangularity plasmas in compact STs. This approach of the present invention marks a significant stride for realizing the potential of compact and efficient fusion energy systems.

The ultra compact spherical tokamak of the invention utilizes high-temperature superconductor coils. High-temperature superconductor coils are employed to achieve higher conductor current densities and thus, higher magnetic fields at higher operational temperatures, surpassing conventional materials like copper and low-temperature superconductors.

Negative triangularity shaped plasma is another key feature of the design of the tokamak subject to the invention. The plasma shape is configured with negative triangularity, a unique feature that provides an integrated core-edge power exhaust solution with high confinement for high power density reactors with a quiescent plasma devoid of edge localized modes. Negative triangularity places the divertor leg naturally at larger radii and provides extra room in the central stack to accommodate a powerful solenoid, a neutron shielding and a tritium breeding blanket.

The present invention provides a spherical tokamak nuclear fusion reactor with advanced central solenoid. This design incorporates a spherical tokamak featuring an advanced central stack based on a sand-hour glass shape, providing more space for neutron shielding and tritium breeding on the central column.

The toroidal magnetic field in a tokamak is generated by toroidal field (TF) coils, while the central solenoid induces the plasma current responsible for the poloidal magnetic field. This combination produces the helicity of the magnetic field, confining the plasma. Traditional TF coils are typically D-shaped copper or superconducting magnets. In conventional tokamaks the larger size required to achieve high fusion energy (fusion power scales with βN²Bₜ⁴R³, Bₜ toroidal magnetic field, β_{N} the normalized plasma pressure) results in elevated construction costs.

In STs, the high-power densities that can be achieved pose additional challenges to their Plasma Facing Components (PFCs), necessitating alternative power and particle exhaust techniques. The limited space for the central column is one of the biggest challenges for a ST. Addressing the limitation in the design of the central solenoid in STs, the present invention utilizes a negative triangularity plasma shape, optimizing the available space for the central column by implementing a sand-hour glass shape for the central solenoid.

An optimized HTS central solenoid with enlarged ends allows for higher magnetic fields, enabling a boost in fusion power in a compact device with large plasma β_{N}.

### Spherical Tokamak with Negative Triangularity Shaped Plasmas

Spherical tokamaks with negative triangularity shaped plasmas are an attractive solution for a tokamak-based fusion power plant, offering a solution to the integration of the plasma core and the edge as it provides a high confinement regime with manageable power loads on Plasma Facing Components (PFCs).

The synergy of high core plasma confinement in NT shaped plasmas, observed reduction of microturbulence, and the unique characteristics of low aspect ratio devices may lead to a new super-improved high confinement scenario in NT shaped high-field STs. According to the present invention, the decreasing aspect ratio, in conjunction with NT shaped plasma, has the potential to create favourable conditions for providing a superior high confinement regime with reduced fluctuations, compatible with a boundary solution for power exhaust and self-sufficient tritium breeding.

### Super-improved core plasma confinement in STs with NT shaped plasma

The combination of improved confinement properties observed in NT shaped plasmas in conventional tokamaks, together with the naturally improved core confinement observed in low aspect ratio devices may lead to a new super improved high confinement scenario in NT shaped STs.

While NT shaped plasmas have recently been observed to suppress microturbulence and associated transport in the TCV and DIII-D tokamaks, the benefit of low aspect ratio in suppressing both electrostatic and electromagnetic micro instabilities have been reported several times in the past *(*S. Kaye et al., 1999, Fusion Technology 36, 17*).*

In the linear physics description, owing to the so-called finite beta drift reversal effect, the decreasing aspect ratio can reduce the precessional frequency of trapped particles, and thereby enhances the favourable region with the good orbit-averaged curvature *(*C. M. Roach et al, 1995, Plasma Physics and Controlled Fusion, 37, 679*).* However, it should be emphasized that trapped-particle-driven modes, such as the trapped electron mode (TEM), still play crucial roles in setting the turbulent transport in spherical tokamaks, since the trapped particle fraction increases as the aspect ratio decreases. Consequently, the turbulent transport will decrease with aspect ratio in TEM-dominant regimes. Furthermore, spherical tokamaks are usually characterized by a large toroidal rotation, and the associated strong E×B flow shear can largely suppress long wavelength microturbulence (≥ the ion Larmor radius) driven by ion temperature gradient (ITG) and/or long wavelength trapped electron mode instabilities. Therefore, the ion heat transport in spherical tokamaks can approach the neoclassical level *(*J. E. Kinsey et al, 2007, Physics of Plasmas 14 102306*),* albeit the electron heat transport is almost always dominated by turbulent transport. A combination of a NT shaped plasma in a low aspect ratio device may lead to a new super improved confinement scenario with low fluctuation levels.

STs typically achieve higher toroidal plasma beta (βₜ) than conventional tokamaks, making them particularly appealing for exploring the potential of negative triangularity shaped plasmas for enhanced confinement. While conventional tokamaks are typically limited by the Troyon limit (β_{N}=3), STs can attain βₜ values of up to 40% with β_{N} reaching 6 *(*D. C. Robinson, 1999, Plasma Physics and Controlled Fusion, 41, A 143*).*

The present invention utilizes NT shaped plasma to facilitate power exhaust in a spherical tokamak. In the context of a tokamak-based FPP, effective power and particle exhaust pose significant challenges, especially for future ST-based FPPs with their elevated power densities. NT-shaped plasmas offer compelling solutions, including the absence of Edge Localized Modes (ELMs), a larger divertor wetted area, and the incorporation of a radiative edge mantle to mitigate power exhaust is also easier in an L-mode regime given that there is no requirement on the power crossing the separatrix. These attributes contribute to addressing key challenges on the path to design a compact ST-based FPP.

Furthermore, NT-shaped plasmas provide a solution to a primary drawback of STs, the limited space for essential shielding on the central stack to mitigate high nuclear power loads. In accordance with one aspect of the present invention, the adaptability of the central stack design, from a simple straight cylinder to a sand hourglass shape enabled by NT-shaped plasmas provides increased space for neutron shielding and tritium breeding. The spherical tokamak of the invention allows for higher toroidal magnetic fields at higher operational temperatures and thus reduced costs, thereby boosting fusion power output by using High-Temperature Superconductors (HTS). This multifaceted approach of the invention reveals the potential of NT-shaped plasmas in optimizing the performance and feasibility of future ST-based FPPs.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1 - Shows two graphs for comparing the fusion power as a function of size, and magnetic field for conventional and spherical tokamaks.
Figure 2 - Shows a cross-section view of the compact spherical-type tokamak according to one embodiment of the invention.
Figure 3 - Shows a cross-section view of the compact spherical-type tokamak according to one embodiment of the invention.

### PREFERRED EMBODIMENT OF THE INVENTION

The present invention introduces an ultra-compact spherical tokamak (1) that combines three key features aimed at accelerating fusion energy as a viable energy source, these features are spherical tokamaks, negative triangularity plasma shape and high-temperature superconducting coils to achieve high magnetic field in an ultra-compact reactor with reduced operational costs.

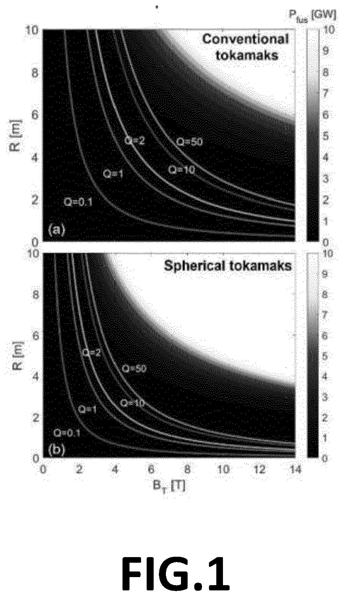

In figure 1, two graphs are shown to compare the fusion power, and fusion power gain (Q), as a function of size for conventional and spherical tokamaks, inhere major radius is R and toroidal magnetic field is Bt. As shown in figure 1, STs can achieve the same fusion powers and fusion power gains as conventional tokamaks in machines significantly smaller.

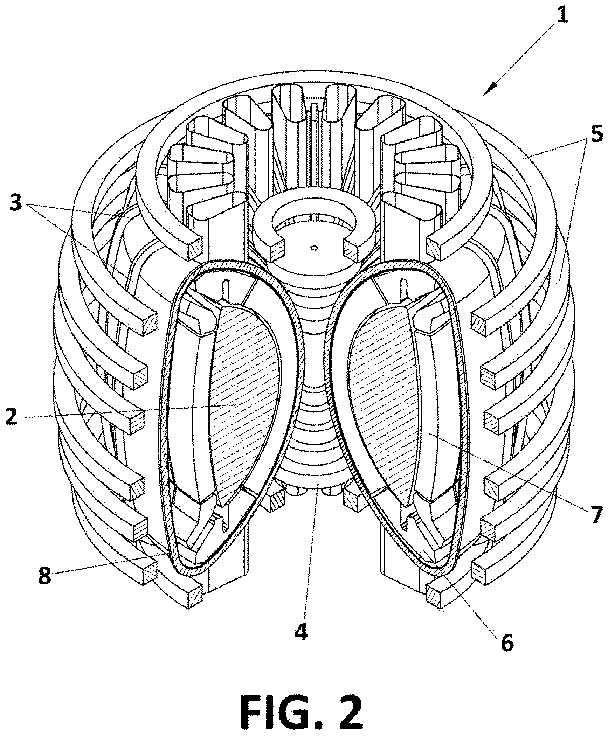

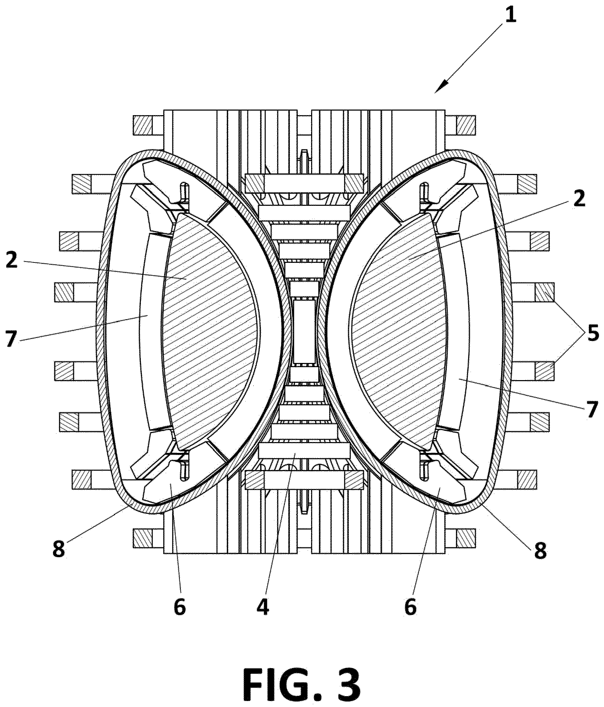

In figure 2 and 3 cross-section views of the compact spherical-type tokamak (1) of the invention is shown from different angles
According to one embodiment of the invention a compact spherical-type tokamak (1) comprising a toroidal vacuum vessel (8) and a magnetic field system configured to confine a high temperature plasma (2), wherein the plasma (2) is configured to operate with negative triangularity (NT) plasma shape, the plasma (2) major radius is 3 m or less and the plasma (2) current is 14 MA or less, the plasma (2) has an aspect ratio of 2.2 or less, the magnetic field system comprises a solenoid (4), toroidal field coils (3) and poloidal field coils (5), wherein the toroidal field coils (3) comprise high temperature superconductor (HTS) material, the magnetic field in use includes a toroidal component of 10 T or less, preferably 6 T.

Fusion alpha particles and energetic neutrons are produced by fusing deuterium and tritium ions. The neutrons are generated at a rate of at least 1x 10¹⁷ neutrons per second, preferably at least 5× 10¹⁸ neutrons per second by fusing deuterium and tritium with a ratio of 50:50, preferably at least 70:30.

The central column of the tokamak (1) is housing the solenoid (4) as shown in Fig.2. The tokamak (1) of the invention utilizes a solenoid (4) that consists of HTS material and employs an advanced shape. Instead of using a regular shape for the solenoid (4), like cylindrical, a sand-hour glass shape is used adapted to the negative triangularity shape of the plasma (2). This provides more space for shielding, and tritium breeding on the central column, solving the most critical issue of spherical tokamaks. The plasma (2) is configured to operate with negative triangularity (NT) shape. NT shape is obtained with poloidal field coils (5) placed external to the vacuum vessel (8). The poloidal field coils (5) provide flexibility in operation of single null and double null plasmas.

The tokamak (1) may be equipped with an advanced divertor (6) to reduce the heat and particle loads per unit area on the walls of the vacuum vessel (8). The plasma (2) with negative triangularity shape places the divertor (6) at larger radius compared to positive triangularity shape providing a natural mitigation tool for the divertor (6) heat load and provides extra room in the central stack to accommodate the solenoid (4), a neutron shielding and a tritium breeding blanket. The tritium breeding blanket, is located behind the first wall (7) of the vacuum vessel (8)."

The magnetic field system of the tokamak (1) comprises toroidal field coils (3) which are adapted to the negative triangularity plasma shape and have an inversed D-shape design. The toroidal field coils (3) made from a material comprising high temperature superconductor (HTS), preferably cooled in use to 20K or more.

The tokamak (1) of the invention may have wave heating and / or neutral beam heating systems with different injection angles, optimized for plasma heating and current drive. This configuration delivers a power input to the plasma less than 100 MW, preferably less than 10 MW. And the tokamak (1) is operated at a fusion energy gain factor Q>1, preferable Q>10, more preferable Q>50.

The plasma of the tokamak (1) can be maintained steady state for more than 10 seconds, preferably for more than 100 seconds, more preferably for more than 1000 seconds. The plasma (2) is characterized by a ratio of plasma to magnetic pressure (plasma beta) greater than 5%, preferably greater than 10%.

According to an embodiment of the invention a method of generating fusion energy by operating a compact spherical tokamak (1) with plasma (2) in negative triangularity comprising a toroidal vacuum vessel (8) and a magnetic field system comprising a solenoid (4), poloidal field coils (5) and toroidal field coils (3) made of a material comprising HTS configured to confine a high temperature plasma (2), comprising generating a magnetic field with a toroidal component of 10 T or less, preferably 6 T, confining the plasma (2) with a major radius of 3 m or less and an aspect ratio of 2.2 or less, operating a plasma (2) current of 14 MA or less, emitting fusion alpha particles and neutrons and confining said alpha particles in the plasma (2). The neutrons are generated at a rate of at least 1x 10¹⁷ neutrons per second, preferably at least 5× 10¹⁸ neutrons per second by fusing deuterium and tritium with a ratio of 50:50, preferably at least 70:30. The plasma (2) may be maintained steady state for more than 10 seconds, preferably for more than 100 seconds, more preferably for more than 1000 seconds. The tokamak (1) of said method may have a divertor (6) and a solenoid (4) with a sand-hour glass shape.

## Claims

1. A compact spherical-type tokamak (1) comprising a toroidal vacuum vessel (8) and a magnetic field system configured to confine a high temperature plasma (2), wherein:
- the plasma (2) is configured to operate with negative triangularity (NT) plasma shape, the plasma (2) major radius is 3 m or less and the plasma current is 14 MA or less,
- the plasma (2) has an aspect ratio of 2.2 or less,
- the magnetic field system comprises a solenoid (4), toroidal field coils (3) and poloidal field coils (5), wherein the toroidal field coils (3) comprise high temperature superconductor (HTS) material,
- the magnetic field in use includes a toroidal component of 10 T or less, preferably 6 T.

2. The tokamak (1) of claim 1, wherein the plasma comprises deuterium y tritium ions to produce fusion alpha particles and energetic neutrons.

3. The tokamak (1) of claim 1, wherein the solenoid (4) has a sand-hour glass shape.

4. The tokamak (1) of claim 1, wherein the poloidal field coils (5) are placed external to the toroidal vacuum vessel (8).

5. The tokamak (1) of claim 1, further including a divertor (6) to reduce the heat and particle loads per unit area on the walls of the vacuum vessel (8).

6. The tokamak of (1) claim 1, wherein the HTS material cooled in use to 20K or more.

7. The tokamak (1) of claim 1, wherein the plasma (2) is maintainable in a steady state for more than 10 seconds, preferably for more than 100 seconds, more preferably for more than 1000 seconds.

8. The tokamak (1) of any preceding claim, further including a neutral beam heating system with different injection angles optimized for plasma heating and current drive delivering a power input to the plasma less than 100 MW, preferably less than 10 MW.

9. The tokamak (1) of claim 1, is operated at a fusion energy gain factor Q>1, preferable Q>10, more preferable Q>50.

10. The tokamak (1) of claim 1, wherein the plasma (2) has a ratio of plasma pressure to magnetic pressure greater than 5%, preferably greater than 10%.

11. A method of generating fusion energy by operating a compact spherical tokamak (1) with plasma (2) in negative triangularity comprising a toroidal vacuum vessel (2) and a magnetic field system comprising a solenoid (4), poloidal field coils (5) and toroidal field coils (3) made of a material comprising HTS configured to confine a high temperature plasma, comprising the steps of:
- generating a magnetic field with a toroidal component of 10 T or less, preferably 6 T,
- confining the plasma (2) with a major radius of 3 m or less and an aspect ratio of 2.2 or less,
- operating a plasma current of 14 MA or less,
- emitting fusion alpha particles and neutrons and confining said alpha particles in the plasma (2).

12. The method of claim 11, further comprising maintaining the plasma (2) in a steady state for more than 10 seconds, preferably for more than 100 seconds, more preferably for more than 1000 seconds.

13. The method of claim 11, comprising generating the neutrons at a rate of at least 1× 10¹⁷ neutrons per second, preferably at least 5× 10¹⁸ neutrons per second by fusing deuterium and tritium with a ratio of 50:50, preferably at least 70:30.

## Amended claims

### Amended claims in accordance with Rule 137(2) EPC.

1. A compact spherical-type tokamak (1) comprising a toroidal vacuum vessel (8) and a magnetic field system configured to confine a high temperature plasma (2), wherein the magnetic field system comprises:
a solenoid (4) having a sand-hourglass shape,
toroidal field coils (3) having an inverse D-shaped design,
poloidal field coils (5) external to the vacuum vessel (8),
wherein the solenoid (4), the toroidal field coils (3), and the poloidal field coils (5) each comprise high temperature superconducting (HTS) material, and wherein the vacuum vessel (8) has a cross-section with similar inverse D-shape as the toroidal field coils.

2. The tokamak (1) of claim 1, further including a divertor (6) to reduce the heat and particle loads per unit area on the walls of the vacuum vessel (8).

3. The tokamak (1) of any preceding claim, further including a neutral beam heating system with different injection angles optimized for plasma heating and current drive delivering a power input to the plasma less than 100 MW, preferably less than 10 MW.

4. A method of generating fusion energy by operating a compact spherical tokamak (1) of any of previous claims, comprising the steps of:
- inducing a plasma current by the solenoid (4),
- generating a magnetic field with a toroidal component of 10 T or less, preferably 6 T by the toroidal field coils (3),
- confining the plasma (2) with negative triangularity shape with a major radius of 3 m or less and an aspect ratio of 2.2 or less,
- operating a plasma current of 14 MA or less,
- emitting fusion alpha particles and neutrons and confining said alpha particles in the plasma (2).

5. The method of claim 4, further comprising maintaining the plasma (2) in a steady state for more than 10 seconds, preferably for more than 100 seconds, more preferably for more than 1000 seconds to have a fusion energy gain factor Q>1, preferable Q>10, more preferable Q>50.

6. The method of claim 4, comprising generating the neutrons at a rate of at least 1x 10¹⁷ neutrons per second, preferably at least 5x 10¹⁸ neutrons per second by fusing deuterium and tritium with a ratio of 50:50, preferably at least 70:30.
